# FASCICULE DE BREVET EUROPEEN

(11) **EP 0 823 098 B1**
(45) Date de publication et mention de la délivrance du brevet: **04.11.1998**
(21) Numéro de dépôt: 96914233.0
(22) Date de dépôt: 22.04.1996
(51) Int. Cl.: G06K 19/07, H01L 21/60

(54) **DISPOSITIF DE CONTRE-COLLAGE POUR LA SOLIDARISATION D'UNE BANDE METALLIQUE ET D'UNE BANDE DE MATERIAU ISOLANT**
VORRICHTUNG ZUR KLEBSTOFFVERBINDUNG EINES METALLBANDES MIT EINEM BAND AUS ISOLIERSTOFF
LAMINATING DEVICE FOR JOINING A METAL STRIP AND AN INSULATING MATERIAL STRIP

(30) Priorité: 25.04.1995 FR 9505310
(43) Date de publication de la demande: 11.02.1998
(73) Titulaire: Pem S.A. - Protection Electrolytique des Métaux, 43300 Siaugues-Saint-Romain (FR)
(72) Inventeur: MAESTRI, Daniel, F-43320 Sanssac-l'Eglise (FR); EYMARD, Eric, F-43300 Siaugues-Sainte-Marie (FR)
(74) Mandataire: Thivillier, Patrick
(86) Numéro de dépôt international: FR9600607
(87) Numéro de publication internationale: WO9634361

(56) Documents cités:
- EP-A- 0 296 511
- WO-A-92/15118
- FR-A- 2 379 909
- GB-A- 2 031 796

## Description

L'invention concerne un dispositif de contre-collage de deux bandes de matériaux différents. Elle trouve une application dans le domaine de fabrication des cartes à puce, plus précisément dans la réalisation du support de la puce contenu dans ces cartes.

Les cartes à puce sont de plus en plus répandues, notamment pour leur application monétique avec les cartes bancaires et les cartes téléphoniques par exemple.

De manière connue, une carte à puce est composée d'une carte en matière plastique rigide qui présente une lumière généralement dans un de ses coins. Cette lumière reçoit un ensemble formé d'un support et d'un composant électronique que l'on appelle communément "puce". Le support est lui-même généralement constitué par l'assemblage de deux composants : une partie métallique ajourée appelée grille et une partie isolante. La grille sert d'interface de connexion pour la puce. Cette grille est découpée en zones disjointes ou connecteurs, chacune étant destinée à venir au contact d'un doigt de la machine utilisatrice. La face opposée de cette grille est recouverte d'une pellicule isolante qui présente un certain nombre d'ajourages. Chaque ajourage est disposé de manière précise sur une zone de la grille. Ainsi, il est possible de relier par des fils métalliques, généralement en or, chaque connecteur de la grille avec une zone de la puce.

Pour permettre l'automatisation de cette fabrication, il apparaît donc qu'une grande précision de positionnement est indispensable entre les perforations de la couche isolante et la grille métallique.

De manière courante, les grilles sont produites sur des bandes de grande longueur sur lesquelles on vient coller à chaud la couche isolante, elle-même se présentant sous forme de bande de largeur équivalente. Malheureusement, les matériaux étant de nature différente, les tolérances dans les pas entre les grilles et les pas entre les ajourages, ne sont pas rigoureusement identiques. Il en résulte l'impossibilité de produire de grandes longueurs de bandes, sauf à procéder à des ajustements pour faire coïncider les motifs.

Il apparaît donc un réel problème pour la réalisation automatique de grande longueur de bandes.

Pour tenter résoudre ce problème, on a proposé d'utiliser une machine complexe qui fonctionne selon le principe suivant. Sur une longueur unitaire de bande métallique présentant des grilles distribuées selon un pas donné, on pose une bande d'isolant sur laquelle les ajourages sont disposés selon un pas légèrement inférieur. Pour chaque longueur unitaire, on étend le film isolant pour faire coïncider les ajourages du film isolant avec ceux des grilles. Cet étirement est contrôlé par un système de caméras détectant la coïncidence. Lorsque le positionnement correct est obtenu, le film isolant est appliqué, puis collé sur la bande métallique. Bien que donnant des résultats satisfaisants, ce dispositif, fonctionnant de manière séquentielle, ne permet pas une productivité importante.

Cet état de la technique peut être illustré par l'enseignement des brevets GB-A-2 031 796 et WO-A-92 15118.

Pour résoudre le problème posé d'assurer la mise en correspondance des perforations de la bande isolante et de la bande métallique, on a proposé une solution conforme à celle divulguée par l'enseignement du brevet EP-A-0 296 511. Ce brevet décrit un dispositif dans lequel les feuilles en matériau isolant présentant des perforations, sont placées et collées sur une bande métallique, de manière à mettre en correspondance les perforations du matériau isolant et de la bande métallique. Selon le dispositif divulgué dans ce brevet, chaque feuille est placée puis collée sur la bande métallique sans qu'il y ait de micro-déplacement pour aligner les perforations entre le placement et le collage.

Le problème que se propose donc de résoudre l'invention est de réaliser un dispositif de contre-collage apte à solidariser une bande métallique présentant des perforations périodiques avec une bande de matériau isolant présentant des perforations de périodes spatiales proches.

Ce problème est résolu par un dispositif de contre-collage tel que défini à la revendication 1.

Il apparaît donc, compte tenu de cette combinaison de moyens que le dispositif assure simultanément l'entraînement de la bande métallique et le déplacement de chaque tronçon par rapport à ladite bande pour la mise en regard rigoureuse des perforations. Le centrage s'opère concomitamment à l'entraînement, permettant ainsi d'obtenir un contre-collage en continu, sans nécessiter un arrêt ou une séquence de réglage.

De préférence, pour résoudre le problème de l'acheminement et de l'entraînement des tronçons de film isolant, les moyens aptes à conformer la bande isolante sous forme de tronçons présentent :
- des moyens de prédécoupes des tronçons ;
- des moyens de pose d'au moins un ruban adhésif selon la longueur de la bande, au moins sur les zones prédécoupées ;
- des moyens de découpe complète des zones non prédécoupées pour obtenir des tronçons découpés, solidarisés temporairement par au moins un ruban adhésif.

De préférence, pour résoudre le problème de l'entraînement, les moyens de dépose et d'entraînement sont constitués par une chaîne de maillons d'entraînement articulés entre eux, de largeur apte à recevoir les bandes isolante et métallique, chaque maillon étant de longueur légèrement supérieure à la longueur d'un tronçon du matériau isolant et présentant des pions d'entraînement.

De cette manière, chaque tronçon de film est entraîné par un seul maillon.

De préférence, pour résoudre le problème important de la mise en concordance des perforations de chaque tronçon avec celle de la bande métallique, les moyens aptes à autoriser les micro-déplacements de chaque tronçon par rapport à la bande métallique sont constitués par :
- une plate-forme principale destinée à supporter les tronçons découpés et formant la face supérieure de chaque maillon ;
- une plaque mobile à l'intérieur du corps du maillon, située en retrait de la plate-forme, et apte à se déplacer selon la direction parallèle à la longueur de la bande et portant les pions d'entraînement, lesquels pions traversent et émergent de la plate-forme par des trous de diamètre supérieur.

Il apparaît donc que les pions d'entraînement sont solidaires d'une plaque qui possède une capacité de mouvement par rapport à la chaîne d'entraînement. Ainsi, comme chaque tronçon est entraîné par cette plaque, lorsque les pions prennent en charge l'entraînement de la bande métallique, il y a centrage automatique et mécanique du tronçon sur la portion correspondante de la bande métallique.

Avantageusement, pour permettre l'entraînement de bandes présentant des caractéristiques diverses, notamment en ce qui concerne la position des trous d'entraînement, la plate-forme et la plaque mobile associée forment un sous-ensemble détachable du maillon correspondant.

En ce qui concerne l'assemblage du film et de la bande métallique, les moyens de solidarisation sont de préférence constitués par un système de chauffage, notamment par induction, des deux bandes superposées.

Avantageusement, les moyens de solidarisation comportent :
- une chaîne de plaques de pression entraînée à la même vitesse que la chaîne d'entraînement, chacune des plaques de pression étant de mêmes dimensions que les plates-formes et venant en regard et au contact d'une plate-forme correspondante ;
- deux rampes d'inducteurs disposées en regard l'une de l'autre, la rampe inférieure étant située légèrement en dessous de la trajectoire des plates-formes d'entraînement, et la rampe supérieure étant située légèrement en dessus de la trajectoire des plaques de pression, de sorte que l'alimentation des inducteurs provoque une circulation de courant dans la zone de la bande métallique en regard.

Pour résoudre le problème des échauffements localisés qui entraînent des mauvais collages, chaque plaque de pression comporte de préférence un patin métallique destiné à venir au regard de la bande métallique, de manière à diffuser la chaleur et homogénéiser la température sur toute la surface de solidarisation.

L'invention est illustrée ci-après plus en détail, à l'aide des dessins annexés, dans lesquels :

La figure 1 est une vue d'ensemble schématique de l'invention

Les figures 2 et 3 sont des vues de dessus des deux bandes respectivement isolante et métallique avant contre-collage.

La figure 4 est une vue schématique du dispositif de découpe de la bande isolante, dont la figure 5 montre la progression au cours des étapes de découpe.

La figure 6 est une vue schématique de la chaîne d'entraînement des deux bandes, dont la figure 7 montre l'évolution en regard des étapes.

La figure 8 est une coupe transversale d'un maillon de la chaîne d'entraînement.

Comme indiqué, le dispositif trouve une application avantageuse pour le contre-collage d'une bande métallique avec un film isolant.

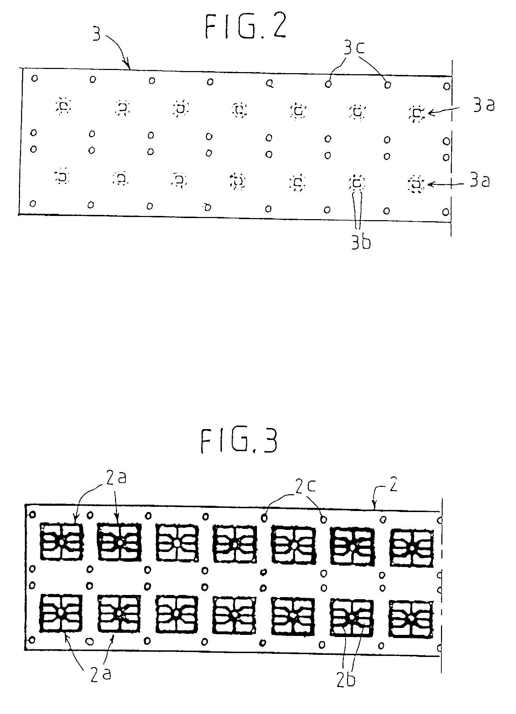

La bande métallique (2), telle que celle illustrée à la figure 3, est généralement en cuivre ou en bronze, et présente une largeur d'environ 35 millimètres. Elle possède deux rangées de motifs (2a) identiques, destinés à former des grilles. Bien entendu, il existe une grande diversité de motifs (carré, rond ...), ainsi que de schémas de découpe qui correspondent à la fonction de la carte destinatrice. De façon courante, on rencontre des motifs possédant huit zones (2b) découpées, disposés à distance régulière les uns des autres (distance entre chaque double motif = pas).

Le film isolant (3) se présente sous forme d'une bande de même largueur (voir figure 2). Il est réalisé en polyamide, tel que celui commercialisé sous la marque Kapton® par la firme Du Pont de Nemours. Il comprend deux rangées de groupes (3a) de perforations (3b) suivant un motif correspondant aux zones des grilles (2a) de la bande métallique (2). Une des faces de ce film reçoit une couche de colle inactive à froid. Cette couche de colle est recouverte d'un film protecteur (3h) en polyester, tel que celui commercialisé sous la marque Mylar® par la même société.

Les deux bandes présentent les mêmes perforations (2c,3c) d'entraînement et de centrage. En ce qui concerne les variations de position des perforations, on considère que le film isolant présente une tolérance de deux centièmes de millimètres sur une longueur équivalente à huit pas grâce à la conception de l'outil de perforation qui travaille simultanément sur huit pas, tandis que la bande métallique possède la même tolérance mais en pas cumulés.

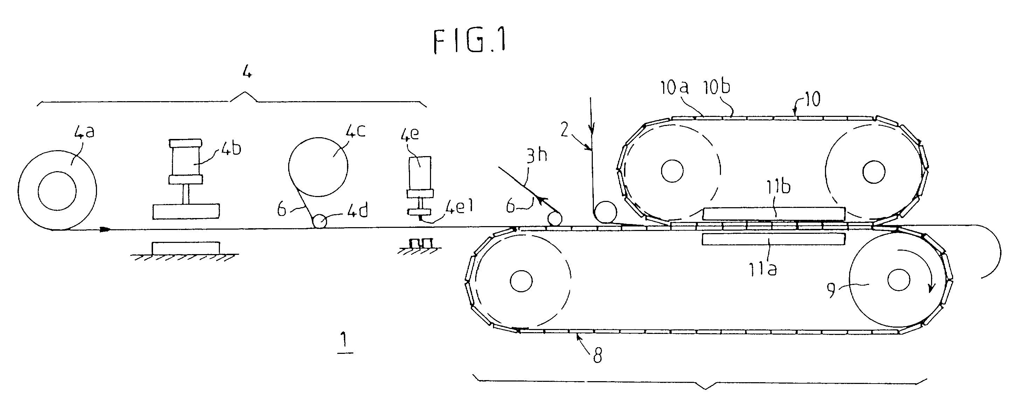

La machine représentée à la figure 1, se décompose en deux sous-ensembles distincts, à savoir un poste de découpe (4) et une chaîne d'entraînement/solidarisation (5).

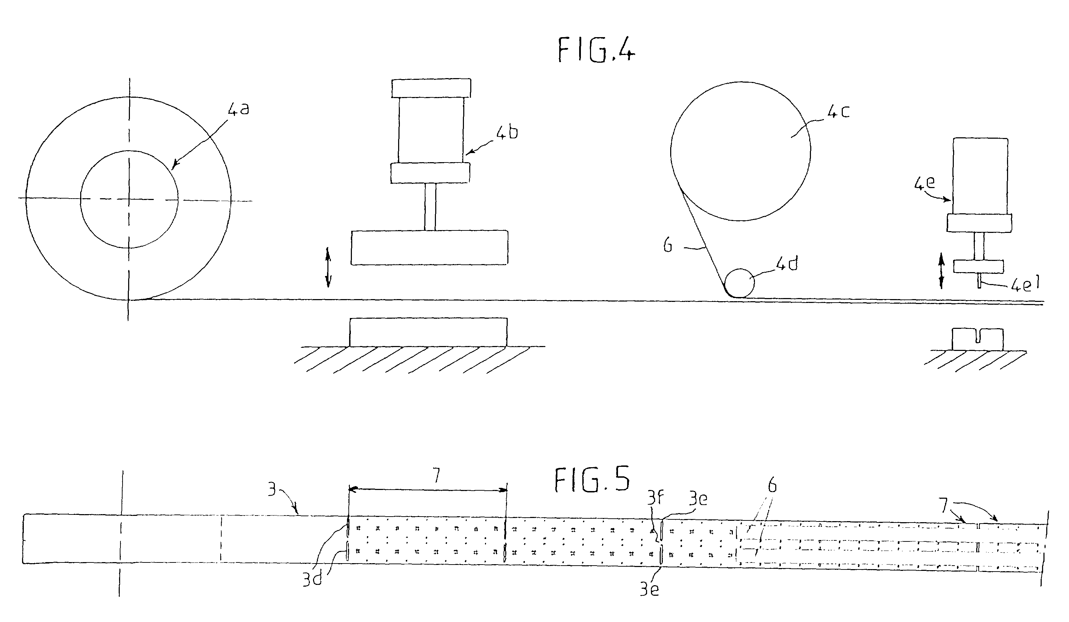

Le poste de découpe (4), illustré à la figure 4, comporte en série et dans l'ordre de parcours du film: un ensemble dévidoir (4a) d'un rouleau de bande isolante recouverte du film de protection, un outil (4b) apte à réaliser la perforation du Kapton et les prédécoupes, un dévidoir (4c) de rubans adhésifs et un rouleau applicateur (4d) et un outil (4e) de finition de la découpe.

Comme on le voit à la figure 5, l'outil (4b) en plus de la perforation du Kapton réalise, par poinçonnage, deux entailles (3d) dans la largeur du film isolant. Seules trois portions maintiennent la continuité entre les tronçons. Il s'agit de la partie médiane (3f) et des arêtes latérales (3e). Ces entailles délimitent des ensembles (7) de huit pas.

Le poste de perforation et de prédécoupe est suivi du poste d'adhésivage (4c,4d), dont la fonction est de poser deux rubans adhésifs (6) au niveau du centre des entailles (3d), en prenant soin de ne pas recouvrir de trous d'entraînement (3c), ni de portions non prédécoupées (3e,3f).

Enfin, la découpe se termine par une opération de découpe finale (4e). Celle-ci est obtenue par l'action d'une lame (4el) comportant trois parties coupantes situées en regard des zones centrales (3f) et latérales (3e). Bien entendu, la découpe est déterminée pour ne pas endommager les rubans adhésifs (6).

En résumé, en sortie du poste de découpe, on obtient une succession de tronçons indépendants (7) mais reliés par deux rubans adhésifs (6). L'ensemble constitue donc une bande composite, apte à être entraînée.

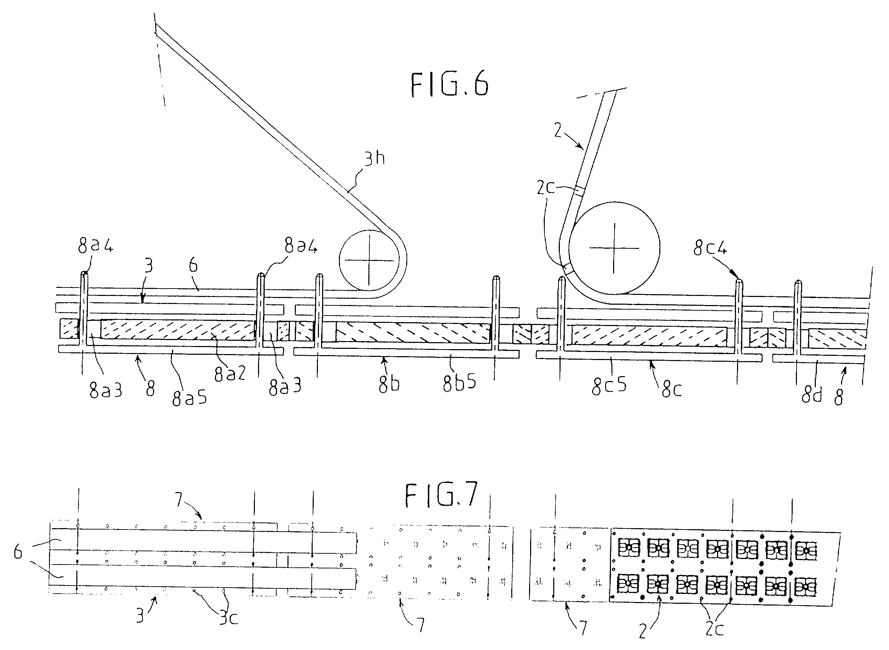

La figure 6 illustre une des caractéristiques principales de l'invention, à savoir le système combiné d'entraînement et de centrage.

Ce système repose sur le fonctionnement d'une chaîne (8) de maillons articulés. Cette chaîne est entraînée par une couronne d'entraînement général (9). Chaque maillon (8a) comprend, outre les organes de roulement (8a1), une plate-forme principale (8a2) qui reçoit la bande d'isolant (3). Cette plate-forme comporte des trous (8a3), au moins au nombre de quatre. Ces trous laissent dépasser vers le haut, quatre pions ou doigts d'entraînement (8a4). Ces quatre doigts sont solidaires d'une plaque mobile (8a5), située en retrait de la plate-forme (8a.). Cette plaque peut se déplacer dans un plan parallèle à la plate-forme.

Comme on le voit à la figure 6, les premiers maillons (8a,8b) de la chaîne entraînent le film d'isolant (3). La tension du film fait que les plaques mobiles (8a5, 8b5) sont tirées vers l'arrière jusqu'à leur position de butée, à l'arrière des trous de passage (8a3, 8b3). La présence du ruban adhésif (6) permet de tirer les tronçons suivants.

Comme indiqué, le film isolant est recouvert d'une pellicule protectrice (3h) de la couche de colle. Avant la dépose de la bande métallique, on procède à la séparation de ce film de Mylar® et des rubans adhésifs (6) par enroulement en vue de leur récupération. A ce moment, le tronçon considéré (7) est libre et ne subit aucun effort d'entraînement.

Au niveau du maillon suivant (8c), la bande métallique est présentée sur le maillon comportant un tronçon isolant. Les pions d'entraînement (8c4) traversent la bande métallique par les trous appropriés (2c), provoquant l'entraînement de la bande métallique (2). Dans ces conditions, la plaque mobile (8c5) se déplace de telle sorte que les pions d'entraînement (8c4) alignent les trous d'entraînement de la bande métallique (2c) et ceux (3c) du tronçon en question.

Comme on le voit sur la figure 6, la plaque mobile (8c5) se déplace vers l'avant par rapport au maillon correspondant (8c). De cette manière, la coïncidence des perforations est parfaitement respectée sur les huit pas du tronçons. A la sortie de cette zone, chaque maillon (8d) transporte une portion de la bande métallique sous laquelle repose un tronçon de film isolant parfaitement positionné.

Plus avant, on procède à l'opération de solidarisation proprement dite. Cette solidarisation fait appel à une deuxième chaîne (10), dite chaîne de pression. Elle est composée de maillons (10a, 10b) de même taille que les maillons d'entraînement. Elle est destinée à appliquer une certaine pression sur l'assemblage pendant son chauffage.

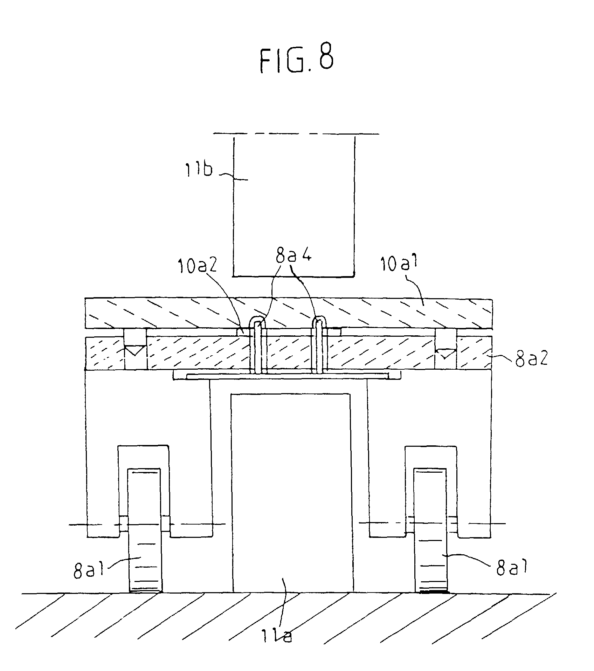

Le chauffage est assuré par deux rampes d'inducteurs (11a, 11b) placées aussi près que possible des plates-formes (8a2, 10a1). Comme on le voit sur la figure 8, les maillons ont une forme de U renversé, la plate-forme (8a2) formant la base du U et les organes de roulement (8a1) constituant les bras. Les inducteurs (11a) pénètrent dans l'espace inter-bras et sont orientés en direction de la plate-forme (8a2).

Les maillons de la chaîne supérieure sont composés d'une plaque de pression (10a1) destinée à venir au contact de la bande métallique et à la plaquer contre le tronçon isolant. Le contact entre la plaque de pression et la bande métallique se fait par un patin métallique (10a2) solidaire de la plaque.

Lorsque les inducteurs (11a, 11b) sont alimentés, des courants de Foucault sont induits dans la bande métallique (2), ce qui en produit un échauffement. L'élévation de température consécutive provoque la fusion de la couche de colle du film isolant (7), et donc la solidarisation des deux éléments. Compte tenu des découpes (2b) présentes sur la bande métallique, les courants induits sont mal répartis. C'est pour cela que l'on intercale un patin métallique (10a2) qui homogénéise la température et sert de diffuseur. De cette manière, le collage est uniforme.

La description qui précède ne concerne qu'un mode particulier de réalisation et qu'on ne sort pas de l'invention en utilisant des moyens similaires. On peut notamment citer l'utilisation d'organes de découpe mécaniquement combinés avec les organes d'entraînement, ou à l'inverse complètement indépendants.

Il ressort de ce qui précède que le dispositif conforme à l'invention permet contrairement aux dispositifs existants, d'allier une grande précision de réalisation de bandes contrecollées avec un fonctionnement en continu des chaînes de fabrication.

## Revendications

1. Dispositif de contre-collage (1), apte à solidariser une bande métallique (2) présentant une pluralité de groupes (2a) de perforations disposées périodiquement sur la longueur, avec une bande de matériau isolant (3) présentant une autre pluralité de groupes (3a) de perforations de période spatiale proche, caractérisé en ce qu'il comprend :
- des moyens aptes, d'une part, à réaliser sur la bande isolante des perforations à intervalles réguliers, et d'autre part, à découper ladite bande isolante en tronçons (7) ;
- des moyens (8) de dépôt de la bande métallique sur lesdits tronçons de la bande isolante et des moyens (8) d'entraînement de la bande métallique superposée auxdits tronçons de la bande isolante ;
- des moyens (8a4, 8a5) aptes à autoriser des micro-déplacements de chaque tronçon (7) par rapport à la bande métallique (2) à laquelle le tronçon est déjà superposé pour mettre en correspondance les perforations de chacune des bandes avec une grande précision ;
- des moyens de solidarisation (10, 11a, 11b) de chaque tronçon de la bande isolante sur la bande métallique.

2. Dispositif selon la revendication 1, caractérisé en ce que les moyens (4) aptes à découper la bande isolante en tronçons présentent :
- des moyens (4b) de prédécoupes des tronçons ;
- des moyens (4c, 4d) de pose d'au moins un ruban adhésif (6) selon la longueur de la bande isolante, au moins sur les zones prédécoupées ;
- des moyens (4e) de découpe complète des zones non prédécoupées (3e, 3f) pour obtenir des tronçons (7) découpés, solidarisés temporairement par au moins un ruban adhésif (6).

3. Dispositif selon la revendication 1, caractérisé en ce que les moyens de dépôt et d'entraînement sont constitués par une chaîne (8) de maillons d'entraînement articulés entre eux, de largeur apte à recevoir les bandes isolante (3) et métallique (2), chaque maillon (8a) étant de longueur légèrement supérieure à la longueur d'un tronçon (7) et présentant des pions d'entraînement (8a4).

4. Dispositif selon le revendication 3, caractérisé en ce que les moyens aptes à autoriser les micro-déplacements de chaque tronçon par rapport à la bande métallique sont constitués par :
- une plate-forme principale (8a2) destinée à supporter les tronçons découpés et formant la face supérieure de chaque maillon ;
- une plaque mobile (8a5) à l'intérieur du corps du maillon, située en retrait de la plate-forme (8a2), et apte à se déplacer selon la direction parallèle à la longueur de la bande et portant les pions d'entraînement (8a4), lesquels pions traversent et émergent de la plate-forme (8a2) par des trous (8a3) de diamètre supérieur.

5. Dispositif selon la revendication 4, caractérisé en ce que la plate-forme (8a2) et la plaque mobile (8a4) forment un sous-ensemble détachable du maillon (8a) correspondant.

6. Dispositif selon la revendication 1, caractérisé en ce que les moyens de solidarisation sont constitués par un système de chauffage des deux bandes superposées.

7. Dispositif selon la revendication 6, caractérisé en ce que le système de chauffage est du type à induction magnétique.

8. Dispositif selon la revendication 4, caractérisé en ce que les moyens de solidarisation comportent :
- une chaîne (10) de plaques de pression (10a1) entraînée à la même vitesse que la chaîne d'entraînement, chacune des plaques de pression (10a1) étant de mêmes dimensions que les plates-formes (8a2) et venant en regard et au contact d'une plate-forme correspondante ;
- deux rampes d'inducteurs (11a, 11b) disposées en regard l'une de l'autre, la rampe inférieure (11a) étant située légèrement en dessous de la trajectoire des plates-formes d'entraînement (8a2), et la rampe supérieure (11b) étant située légèrement en dessus de la trajectoire des plaques de pression (10a1), de sorte que l'alimentation des inducteurs provoque une circulation de courant dans la zone de la plaque métallique en regard.

9. Dispositif selon la revendication 8, caractérisé en ce que chaque plaque de pression (10a1) comporte un patin métallique (10a2) destiné à venir au contact de la bande métallique (2), de manière à diffuser la chaleur et homogénéiser la température sur toute la surface de solidarisation.

## Patentansprüche

1. Kaschiervorrichtung (1), die geeignet ist, ein Metallband (2) mit mehreren Lochgruppen (2a), die in Längsrichtung in regelmäßigen Abständen angeordnet sind, fest mit einem Isoliermaterialband (3) zu verbinden, das ebenfalls mehrere Lochgruppen (3a) aufweist, die räumlich nahe beieinanderliegen, dadurch gekennzeichnet, daß sie folgende Einrichtungen umfaßt:
- Vorkehrungen, die einerseits geeignet sind, das Isolierband in regelmäßigen Abständen zu perforieren, und die andererseits geeignet sind, das Isolierband in Teilstücke (7) zu zerschneiden;
- Vorkehrungen (8) für die Aufbringung des Metallbandes auf die besagten Teilstücke des Isolierbands und Mitnahmevorkehrungen (8) für das den Teilstücken des Isolierbandes überlagerte Metallband;
- Vorkehrungen (8a4, 8a5), die geeignet sind, kleine Verschiebungen jedes Teilstücks (7) gegenüber dem mit dem Teilstück bereits überlagerten Metallband (2) zu ermöglichen, um die Perforierungen der jeweiligen Bänder mit hoher Präzision in Deckung zu bringen;
- Vorkehrungen (10, 11a, 11b) für die feste Verbindung jedes Teilstücks des Isolierbandes am Metallband.

2. Vorrichtung nach Anspruch 1, dadurch gekennzeichnet, daß die Vorkehrungen (4) für das zerschneiden des Isolierbandes in Teilstücke folgende Einrichtungen umfassen:
- Vorkehrungen (4b) für das Vorstanzen der Teilstücke;
- Vorkehrungen (4c, 4d) für das Aufbringen mindestens eines Klebebandes (6) entsprechend der Länge des Isolierbandes, mindestens auf den vorgestanzten Bereichen;
- Vorkehrungen (4e) für das komplette Abtrennen der nicht vorgestanzten Bereiche (3e, 3f), um abgetrennte Teilstücke (7) zu erhalten, die vorübergehend durch mindestens ein Klebeband (6) fest verbunden sind.

3. Vorrichtung nach Anspruch 1, dadurch gekennzeichnet, daß die Auftrags- und Mitnahmevorkehrungen aus einer Kette (8) mit zueinander gelenkig gelagerten Antriebsgliedern bestehen, die so breit ist, daß sie das Isolierband (3) und das Metallband (2) aufnehmen kann, wobei jedes Kettenglied (8a) geringfügig länger ist als ein Teilstück (7) und Mitnahmestifte (8a4) aufweist.

4. Vorrichtung nach Anspruch 3, dadurch gekennzeichnet, daß die Vorkehrungen, die geeignet sind, die kleinen Verschiebungen des jeweiligen Teilstücks gegenüber dem Metallband zu ermöglichen, aus folgenden Elementen bestehen:
- eine Hauptplattform (8a2), die die abgetrennten Teilstücke trägt und die Oberseite des jeweiligen Kettengliedes bildet;
- eine bewegliche Platte (8a5) innerhalb des Kettengliedkörpers, die hinter der Plattform (8a2) zurücksteht und geeignet ist, sich parallel zur Längsrichtung des Bandes zu verschieben, und die die Mitnahmestifte (8a4) trägt, wobei diese Stifte die Plattform (8a2) durch Löcher (8a3), die einen größeren Durchmesser aufweisen, durchqueren und daraus hervortreten.

5. Vorrichtung nach Anspruch 4, dadurch gekennzeichnet, daß die Plattform (8a2) und die bewegliche Platte (8a5) ein Teilsystem bilden, das vom entsprechenden Kettenglied (8a) abgetrennt werden kann.

6. Vorrichtung nach Anspruch 1, dadurch gekennzeichnet, daß die Vorkehrungen für die Herstellung der Verbindung aus einem Erhitzungssystem der beiden übereinanderliegenden Bänder bestehen.

7. Vorrichtung nach Anspruch 6, dadurch gekennzeichnet, daß es sich bei dem Erhitzungssystem um eine magnetische Induktion handelt.

8. Vorrichtung nach Anspruch 4, dadurch gekennzeichnet, daß die Vorkehrungen für die feste Verbindung folgende Teile umfassen:
- eine Kette (10) aus Druckplatten (10a1), die mit der gleichen Geschwindigkeit wie die Mitnahmekette angetrieben wird, wobei jede einzelne Druckplatte (10a1) die gleichen Abmessungen wie die Plattformen (8a2) besitzt und mit einer entsprechenden Plattform in Gegenlage und in Kontakt kommt;
- zwei einander gegenüberliegende Induktorenrampen (11a, 11b), wobei die untere Rampe (11a) leicht unterhalb der Bahn der Mitnahmeplattformen (8a2) und die obere Rampe (11b) leicht oberhalb der Bahn der Druckplatten (10a1) liegt, so daß die Speisung der Induktoren einen Stromumlauf im Bereich der gegenüberliegenden Metallplatte bewirkt.

9. Vorrichtung nach Anspruch 8, dadurch gekennzeichnet, daß jede Druckplatte (10a1) einen Metallschuh (10a2) besitzt, der mit dem Metallband (2) in Kontakt treten soll, um die Wärme abzugeben und auf der gesamten Verbindungsfläche eine einheitliche Temperatur herbeizuführen.

## Claims

1. Laminating machine (1) capable of bonding a metal strip (2) having a plurality of sets (2a) of perforations arranged regularly over its length to a strip of insulating material (3) having another plurality of sets (3a) of closely spaced perforations characterised in that it comprises:
- means capable, on the one hand, of making perforations at regular intervals in the insulating strip and, on the other hand, of cutting said insulating strip into sections (7);
- means (8) of applying the metal strip to said sections of insulating strip and means (8) of transporting the metal strip superimposed on said sections of insulating strip;
- means (8a4, 8a5) capable of allowing very small movements of each section (7) relative to metal strip (2) on which the section is already superimposed in order to align the perforations in each of the strips highly accurately;
- means of bonding (10, 11a, 11b) each section of insulating strip to the metal strip.

2. Machine as claimed in claim 1 characterised in that means (4) capable of cutting the insulating strip into sections have:
- means (4b) of pre-cutting the sections;
- means (4c, 4d) of applying at least one adhesive tape (6) lengthways on the insulating strip at least over the pre-cut areas;
- means (4e) of completely cutting out those areas that have not been pre-cut (3e, 3f) in order to obtain cut sections (7) temporarily attached by at least one adhesive tape (6).

3. Machine as claimed in claim 1 characterised in that the means of application and transport consist of a chain (8) of flexibly joined drive links having a width suitable for accommodating the insulating (3) and metal (2) strips, each link (8a) being slightly longer than the length of one section (7) and having drive pins (8a4).

4. Machine as claimed in claim 3 characterised in that the means capable of allowing very small movements of each section relative to the metal strip consist of:
- a main platform (8a2) intended to support the cut sections and forming the upper face of each link;
- a moveable plate (8a5) inside the body of the link which is located back from the platform (8a2) and capable of moving in a direction that is parallel to the length of the strip and carrying drive pins (8a4) which pass through and emerge from platform (8a2) through holes (8a3) having a diameter that is larger than the pins.

5. Machine as claimed in claim 4 characterised in that platform (8a2) and moveable plate (8a5) form a subassembly that can be disassembled from the corresponding link (8a).

6. Machine as claimed in claim 1 characterised in that the means of bonding consist of a system to heat the two superimposed strips.

7. Machine as claimed in claim 6 characterised in that the heating system is of the magnetic induction type.

8. Machine as claimed in claim 4 characterised in that the means of bonding comprise:
- a chain (10) of pressure plates (10a1) driven at the same speed as the transport chain, each of the pressure plates (10a1) having the same dimensions as platforms (8a2) and coming up against and in contact with a matching platform;
- two lines of inductors (11a, 11b) arranged opposite each other, the lower line (11a) being located slightly underneath the path of transport platforms (8a2) and the upper line (11b) being located slightly above the path of pressure plates (10a1) so that applying power to the inductors causes a flow of current in that area of the metal plate facing them.

9. Machine as claimed in claim 8 characterised in that each pressure plate (10a1) has a metal pad (10a2) intended to come into contact with metal strip (2) in order to distribute the heat, thus ensuring an even temperature over the entire bonding surface area.
